# EUROPÄISCHE PATENTSCHRIFT

(11) **EP 1 094 957 B1**
(45) Veröffentlichungstag und Bekanntmachung des Hinweises auf die Patenterteilung: **07.08.2002**
(21) Anmeldenummer: 99927795.7
(22) Anmeldetag: 28.05.1999
(51) Int. Cl.: B60C 17/06

(54) **FAHRZEUGRAD MIT EINEM NOTLAUFSTÜTZKÖRPER**
VEHICLE WHEEL WITH A RUN FLAT SUPPORT BODY
ROUE DE VEHICULE AUTOMOBILE COMPORTANT UN CORPS D'APPUI POUR ROULEMENT DE SECOURS

(30) Priorität: 05.06.1998 DE 19825311
(43) Veröffentlichungstag der Anmeldung: 02.05.2001
(73) Patentinhaber: Continental Aktiengesellschaft, 30001 Hannover (DE)
(72) Erfinder: HELLWEG, Hans-Bernd, D-30926 Seelze (DE); GLINZ, Michael, D-37535 Neustadt (DE)
(86) Internationale Anmeldenummer: EP9903724
(87) Internationale Veröffentlichungsnummer: WO9964260

(56) Entgegenhaltungen:
- DE-A- 3 507 045
- FR-A- 2 579 527
- US-A- 4 177 849
- US-A- 4 681 147

## Beschreibung

Die Erfindung betrifft ein Fahrzeugrad mit einem Notlaufstützkörper für einen auf einer Radfelge befestigten Luftreifen, der im wesentlichen einen Laufstreifen, zwei Seitenwände, eine Karkasse, Verstärkungselemente, sowie zwei mit Wulstkernen versehene Reifenwülste aufweist, bei dem der Notlaufstützkörper als schalenförmiger Ringkörper innerhalb des Luftreifens ausgebildet ist, der eine den Reifen im Schadensfall abstützende Notlauffläche aufweist und sich mit seinen beiden axial äußeren Wandungsbereichen über ringförmige Stützelemente auf der Radfelge abstützt, wobei die Stützelemente in radialer und in axialer Belastungsrichtung unterschiedliche Elastizitäten aufweisen.

Ein mit einem Notlaufstützkörper versehenes Rad ist in der gattungsbildenden DE-OS 35 07 046 offenbart, wobei der dort gezeigte Notlaufkörper aus einem äußeren metallischen Versteifungsring und einem zwischen Versteifungsring und Felge angeordneten Polsterring besteht. Bei einem solchen Rad ist es nötig, dass der Notlaufstützkörper und das Rad in einer umfangreichen Montage auf die Felge aufgebracht werden, wobei insbesondere der Notlaufkörper und der Versteifungsring sorgfältig im Felgentiefbett fixiert werden müssen. Eine in angemessener Zeit und ohne größeren Aufwand durchführbare Montage ist nachteiligerweise bei diesem System nicht möglich.

Die US-PS 3,610,308 zeigt einen notlauffähigen Reifen, bei dem die Reifenwülste sich zur Reifeninnenseite hin erstrecken und als Notlaufkörper ausgebildet sind, an die sich die Unterseite der Reifenlauffläche anlegen kann. Eine solche Ausbildung eines Notlaufkörpers bedingt jedoch durch die relativ schmale Anlagefläche, die im Notlauf für die Anlage der Lauffläche zur Verfügung steht, eine starke Belastung und einen vorzeitigen Verschleiß der aneinander reibenden bzw. gleitenden Gummiteile. Darüber hinaus können sich auch die als Notlaufstützkörper ausgebildeten Reifenwülste ins Felgentiefbett verschieben und somit einem Abschälen des Reifens Vorschub leisten.

Der Nachteil eines solchen Abschälens im Notlauf wird etwas reduziert durch eine Lösung, wie sie etwa in der DE-AS 10 22 483 offenbart ist, bei der unterhalb des Laufstreifens an der dem Reifenhohlraum zugekehrten Fläche Vorsprünge angeordnet sind, die eine bei Querkräften wirksame Verbindung zwischen dem Laufstreifen und den an den Reifenwülsten ausgebildeten Notlaufringen herstellen. Die Fertigung eines solchen mit Vorsprüngen versehenen Reifens ist relativ aufwendig und es muss darüber hinaus gezielt die Fertigung von Reifen mit Notlaufstützkörpern in Abweichung vom normalen Produktionsprozess eingepasst und geplant werden.

Bei den meisten Notlaufsystemen mit Notlaufstützkörpern für Standardfelgen besteht zudem das Problem, daß die Notlaufstützkörper einerseits bei der Montage möglichst nicht das Aufziehen des Reifens auf die Felge, d.h. das Eintreten des Reifenwulstes ins Tiefbett behindern und damit flexibel sein sollen und andererseits im Notlauf möglichst formstabil bleiben sollen. Diesen gegensätzlichen Anforderungen konnte bisher nur mit zusätzlich zum Notlaufstützkörper eingelegten Halterungen, Abstandshaltern etc. Rechnung getragen werden.

Der Erfindung lag also die Aufgabe zugrunde, ein Fahrzeugrad für Luftbereifung mit einem Notlaufstützkörper bereitzustellen, welcher leicht und ohne besonderen Aufwand auch auf üblichen Tiefbettfelgen (Standardfelgen) montiert werden kann, welcher im Notlauf ein sicheres Fahrverhalten und ein ausreichend formstabiles Abrollen aufrechterhält, welcher ohne übermäßige Gewichtserhöhung Seitenführungskräfte übertragen kann und einem Abschälen des Reifens sicher entgegenwirkt, und welcher flexibel die - auch nachträgliche - Kombination mit bereits bestehenden Reifentypen und -konfektionen erlaubt, so dass eine separate Fertigung und Logistik nicht zwangsläufig vorgehalten werden muß.

Gelöst wird diese Aufgabe durch die Merkmale des Hauptanspruchs. Weitere vorteilhafte Ausbildungen sind in den Unteransprüchen gekennzeichnet.

Hierbei sind die ringförmigen Stützelemente als Verbundkörper ausgebildet, die über die radiale Höhe der Stützkörper aus mehreren miteinander verbundenen Materialschichten unterschiedlicher Elastizität bestehen.

Eine solche Ausbildung der ringförmigen Stützelemente als Verbundkörper ermöglicht die Bereitstellung einer genau auf die erforderlichen Eigenschaften bei der Montage und im Notlauf einstellbare Flexibilität bzw. Elastizität der Stützelemente. Durch die miteinander verbundenen Materialschichten unterschiedlicher Elastizität läßt sich bei entsprechender Schichtung und Stufung der Elastizitäten der einzelnen Materialschichten die Formstabilität der ringförmigen Stützelemente so auslegen, daß nicht nur in radialer und axialer Richtung eine unterschiedliche Verformbarkeit der Stützelemente vorhanden ist, sondern daß sich auch über die radiale Höhe der Stützelemente eine mit dem Abstand zur Felge sich in geeigneter Weise ändernde Verformbarkeit bereitgestellt wird.

Bei einer axialen Belastung der Stützelemente, die zum einen bei der Montage und zum anderen im Notlauf, hier insbesondere bei der Kurvenfahrt, auftreten kann, ist damit eine Möglichkeit der konstruktiven Anpassung auf diese beiden wesentlichen axialen Belastungsfälle gegeben, während gleichzeitig die Tragfähigkeit in radialer Richtung beim Notlauf nicht beeinträchtigt wird.

Vorteilhafterweise ist der Ringkörper als ein geschlitzter Ringkörper mit einem im wesentlichen in axialer Richtung verlaufenden Öffnungsschlitz ausgebildet.
Hierdurch ergibt sich eine Möglichkeit der Verkleinerung der Stützelemente sowie der felgennahen Anordnung aller Notlaufbauteile. Durch die Ausbildung der Stützelemente als für die axiale Belastung während der Montage ausreichend und definiert verformbare Verbundkörper und durch die schlitzförmige Ausbildung des Ringkörpers kann der schalenförmige Ringkörper bzw. dessen äußere Wandungsbereiche in Durchmessern hergestellt werden, die die Durchmesser des Felgenhorns bzw. der Felge nicht oder nur unwesentlich überschreiten.

Bei der Montage besteht durch eine solche Ausbildung nämlich die Möglichkeit, durch axiale Verformung der Verbundkörper und schraubenförmiges Ausfedern des geschlitzten Ringes auf einen vergößerten Montagedurchmesser den Ringkörper in die Reifenkavität einzubringen, nachdem ein Reifenwulst bereits auf einer Felgenschulter fixiert ist. Nach dem Einbringen nehmen der schalenförmige Ringkörper und die angeschlossenen Stützelemente dann wieder ihre ursprüngliche Form mit geringeren Durchmessern ein.

Eine weitere vorteilhafte Ausbildung besteht darin, daß der Verbundkörper eine radial obere und mit dem Ringkörper verbundene Materialschicht beinhaltet, die eine niedrigere Elastizität aufweist als die anschließenden radial unteren Materialschichten.

Durch eine solche Ausbildung erreicht man in den Bereichen, die bei axialer und über die Felge übertragenen Belastung der Stützelemente der größten Biegebeanspruchung ausgesetzt sind, eine erhöhte Formfestigkeit, so daß eine sprunghafte Änderung der Biegelinie - im Extremfall ein Ausknicken des Stützelemenes - im Bereich des Anschlusses an den Ringkörper sicher vermieden wird. Auch kann man hierdurch den radial oberen. Teil des das Stützelement bildenden Verbundkörpers in seiner Formfestigkeit der des Ringkörpers anpassen, wodurch eine durchaus gewünschte starre Aufnahme gebildet wird. Auch können mit einer solchen Ausbildung axiale Belastungen auf den Ringkörper übertragen und, bei entsprechender Konstruktion des Ringkörpers, federnd aufgenommen werden.

Vorteilhafterweise beinhaltet der Verbundkörper ein aus mindestens drei Materialschichten bestehendes Verbundpaket, dessen radial obere Materialschicht und dessen radial untere Materialschicht eine höhere Elastizität aufweisen als die zwischenliegende(n) Materialschicht(en).

Zum einen wird hierdurch die oben genannte starre oder steifere Aufnahme im Verbindungbereich zwischen Ringkörper und Stützelement ermöglicht, die natürlich durch die bereits geschilderte Anordnung einer mit dem Ringkörper verbundenen Materialschicht mit einer im Vergleich zu den anschließenden radial unteren Materialschichten niedrigeren Elastizität noch verbessert wird.

Zum anderen wird auch im radial unteren und nahe der Felge angeordneten Bereich des Stützelementes der Verbundkörper ebenfalls mit niedrigerer Elastizität und damit höherer Formsteifigkeit ausgebildet. Insbesondere in der vorteilhaften Weiterbildung, bei der die radial untere Materialschicht auf der Felge aufliegt, wird so ein sicherer Sitz auf der Felge erreicht und ein Auswandern des Stützelementes ins Tiefbett bei axialen Belastungen im Notlauf sicher vermieden.

Vorteilhafterweise ist die radial obere und mit dem Ringkörper verbundene Materialschicht mit dem jeweiligen axial äußeren Wandungsbereich des Ringkörpers kraftschlüssig verbunden.

Eine solche kraftschlüssige Verbindung, die beispielsweise als Klebverbindung ausgeführt oder aber auch durch Anvulkanisieren erreicht werden kann, bietet sich als einfach herzustellende Verbindung insbesondere für die Großserie an, da hier auf eine automatisierbare und bewährte Verbindungstechnik zurückgegriffen werden kann. Dabei ist durch die Ausbildung des Verbundkörpers aus mehreren Materialschichten und dessen gestufter Elastizität eine auch unter dynamischer Belastung hochfeste Verbindung erreichbar.

Selbstverständlich kann eine solche Verbindung je nach Einsatzfeld auch als teilweise oder vollständig formschlüssige Verbindung, etwa durch Nieten, Schrauben oder - gegebenenfalls lösbare - Rastelemente ausgeführt werden, wobei zusätzlich die Möglichkeit eines Austausches der Stützelemente, etwa periodisch bei jedem Reifenwechsel, ermöglicht wird.

In einer weiteren vorteilhaften Ausbildung sind zur Verbindung des axial äußeren Wandungsbereiches des Ringkörpers als erstem Teil und der radial oberen Materialschicht des Verbundkörpers als zweitem Teil entweder der axial äußere Wandungsbereich des Ringkörpers oder die radial obere Materialschicht mit einem Profilpositiv versehen, wobei der jeweils andere Teil ein zur Aufnahme des Profilpositivs komplementäres Profilnegativ aufweist.

Hierdurch ergibt sich nicht nur eine einfache herzustellende Ausbildung einer lösbaren Verbindung zwischen Ringkörper und Stützelement, sondern auch die Möglichkkeit der Herstellung des das Stützelement bildenden Verbundkörpers als Strangprofil, welches abgelängt zur Verfügung gestellt und mit dem Ringkörper entweder vor oder während der Montage des Notlaufstützkörpers verbunden wird.

Insbesondere bei der bereits genannten Ausführung des Ringkörpers als Schlitzring können nach Ausfedern des geschlitzten Ringes Stützelement und Ringkörper mit Profilpositiv und - negativ einfach ineinander geschoben werden. Ebenso kann ein periodischer Austausch der Stützelemente erfolgen. Gleichermaßen wird der Herstellungsprozeß einer größeren Typenpalette insgesamt vereinfacht, da bei festgelegter Gestaltung von Profilpositiv und - negativ etwa ein Standard-Ringkörper mit für unterschiedliche Reifen- und Fahrzeugtypen angepaßten Stützelementen unterschiedlicher Verbund-Konstruktion kombiniert werden kann.

Bei entsprechend elastischer Ausbildung der Materialien für die Profilpositiv- Profilnegativ-Verbindung läßt sich auch eine ggf. lösbare Rast- oder Schnapverbindung gestalten.

In einer weiteren vorteilhaften Ausbildung ist der axial äußere Wandungsbereich des Ringkörpers mit einer die obere Materialschicht des Verbundkörpers teilweise umgebenden Aufnahme versehen, wobei der Verbundkörper aus mindestens drei Materialschichten besteht, dessen radial obere und durch der Aufnahme des Ringkörpers teilweise umgebene Materialschicht und dessen radial untere und auf der Felge aufliegende Materialschicht eine höhere Elastizität aufweisen als die zwischenliegende(n) Materialschicht(en).

Durch eine solche Konstruktion wird eine Federkennlinie des Stützelementes bereitgestellt, die bei steigender radialer Belastungen stark progressiv verläuft bis zur Blockade der ursprünglichen und ohne Belastung vorhandenen Elastizität der oberen Materialschicht(en) des Verbundkörpers.

Dies geschieht dadurch, das bei entsprechender Auslegung der oberen und durch der Aufnahme des Ringkörpers teilweise umgebenen Materialschicht bei radialer Belastung des Verbundkörpers und Einfederung der oberen Materialschicht diese zunehmend und schließlich vollständig von der starren Aufnahme des Ringkörpers umschlossen und in diesem Verformungszustand durch den dann nicht mehr vorhanden Federweg / Federraum zu einem starren und bei weiter steigender Belastung völlig unelastischen Element wird.

Durch entsprechende Auslegung der Tiefe der Aufnahme erreicht man dann auch eine teilweise Aufnahme der radial weiter unten liegenden Materialschicht des Verbundkörpers, deren Elastitzität dann ebenfalls progressiv vermindert wird.

Gleichermaßen folgt mit zunehmendem Eintauchen der oberen Materialschichten des Verbundkörpers in die Aufnahme die Elastizität des Stützelementes auch bei axialer Belastung einer stark progressiven Kennlinie, wobei axiale Kräfte dann zunehmend durch den Ringkörper aufgenommen werden.

Es wird also ein Notlaufstützkörper mit einem schalenförmigen Ringkörper bereitgestelt, der sich mit seinen beiden axial äußeren Wandungsbereichen über ringförmige Stützelemente auf der Radfelge abstützt, und dessen Stützelemente ohne radiale Belastung in axialer Richtung elastisch und verformbar sind, während bei zunehmender radialer Belastung die Elastizität in radialer und axialer Richtung zunehmend blockiert wird.

Die Abnahme der Elastizität in axialer Richtung unter radialer Belastung beinhaltet weiterhin den großen Vorteil, das beim Notlauf die zunehmende axiale Formstabilität der üblicherweise am Reifenwulst anliegenden Stützelemente ein Eintauchen der Reifenwülste ins Tiefbett und damit das gefürchtete Abspringen des Reifens von der Felge sicher verhindern.

Im Hinblick auf die in der Beschreibungeinleitung geschilderten Nachteile der im Stand der Technik bekannten Notlaufstützkörper läßt sich der erfindungsgemäße Notlaufstützkörper in idealer Weise im unbelasteten Zustand montieren, während im belasteten Zustand die Verformbarkeit bzw. Elastizität mit der Höhe der Belastung progressiv in gewünschter Weise abnimmt.

Vorteilhafterweise bestehen die Materialschichten höherer Elastizität aus Gummi und die Materialschichten niedrigerer Elastizität aus Kunststoff. Hierdurch ergibt sich eine leichte und einfach herzustellende Konstruktion, wobei die Elastizität nicht nur durch die Form und Gestaltung der Materialschichten im Verbundkörper beeinflußt werden kann, sondern auf einfache Weise - z.B. durch unterschiedliche Gummimischungen oder Dichten (Schaumgewichten) des Kunststoffes - auch innerhalb der jeweiligen Materialien als solchen.

In einer vorteilhaften Weiterbildung ist der Notlaufstützkörper als umlaufender schalenförmiger Ringkörper ausgebildet, der aus mindestens zwei durch jeweils eine radiale Einschnürung voneinander getrennten nach radial außen gewölbten Bereichen besteht und der sich über seine beiden axial äußeren Wandungsbereiche abstützt.
Durch die Kontur, die im wesentlichen die Aufteilung der Notlauffläche in zwei aufliegende Schulterbereiche und einen mehr oder weniger stark ausgeprägten Rücksprungbereich beinhaltet, ergibt sich im Zusammenwirken mit der Kurvenform, der Krümmung und den Kraftaufnahme- und Elastizitätseigenschaften der Stützelemente ein Laufverhalten im Pannenlauf, welches die Fahrbereitschaft des Fahrzeuges vollständig erhält und in der Handhabung sich nur geringfügig vom Normallauf unterscheidet.

Zudem werden bei einer solchen Kontur die im Notlauf auf den Ringkörper einwirkenden Radialbeastungen in den den Stützelementen naheliegenden Schulterbereichen konzentriert und somit ohne große Hebelarme und Biegemomente in die als Verbundkörper ausgebildeten Stützelemente eingeleitet, was die Funktionsweise der Stützelemente, insbesondere bei einer Ausbildung der axial äußere Wandungsbereich des Ringkörpers mit einer die obere Materialschicht des Verbundkörpers teilweise umgebenden Aufnahme, besonders unterstützt.

Auch ist bei solchen Ringkörpern die Fähigkeit zur Aufnahme von Seitenführungskräften besonders ausgeprägt, da durch den in den mittleren Bereichen der Notlauffläche bereitgestellten Rücksprung sich die mittleren Teile der Reifenlauffläche bzw. des Unterbaus in die Krümmung einschmiegen können und so in Bezug auf Seitenkräfte einen Formschluss aufbauen können, der die auf die Reifenseiten wirkende Zugkräfte reduziert und somit einem Abspringen des Reifens entgegenwirkt. Die Krümmungsradien sind dabei durch stetig ineinander übergehende Krümmungsradien so ausgebildet, dass im Zusammenwirken mit der Laufflächendicke des Reifens Punkt- oder Linienbelastungen, die zur Zerstörung der Lauffläche führen könnten, nicht auftreten.

Ein weiterer Vorteil eines mit solchen Krümmungen ausgebildeten schalenförmigen Ringkörpers besteht darin, dass während des Notlaufs sehr hohe Punktbelastungen auch etwa beim Überfahren einer Bordsteinkante, aufgenommen werden können und durch die mit Hilfe der Formgebung erhöhte Steifigkeit des schalenförmigen Ringkörpers eine gleichmäßige und für die Felge unschädliche Lastverteilung sich einstellt.

Ein solcher Notlaufstützkörper, der in aller Regel aus einem im Vergleich zu den Stützelementen unelastischen bzw. hartem Material wie Stahl, Aluminium oder verstärktem Kunststoff hergestellt wird, lässt sich durch die Materialwahl in Bezug auf Seitenführungskräfte und Belastungen beim Notlauf beliebig anpassen.

Der schalenförmige Ringkörper kann zudem durch auf seiner zur Felge gerichteten Unterseite befindliche und in Umfangs- oder Axialrichtung verlaufende Rippen verstärkt werden, was das Auffangen von Belastungsspitzen und eine weitere Gewichtseinsparung durch Reduzierung der Wanddicke in weniger belasteten Bereichen erlaubt.

Anhand eines Ausführungsbeispieles soll die Erfindung näher erläutert werden.
Es zeigen
- Fig. 1: ein erfindungsgemäßes Fahrzeugrad mit einem Notlaufstützkörper
- Fig. 2: einen Zwischenschritt während der Montage eines Notlaufstützkörpers für ein erfindungsgemäßes Fahrzeugrad gemäß Fig.1
- Fig. 3: einen als geschlitzter Ringkörper ausgebildeten Notlaufstützkörper mit aufgeschobenen Stützelementen in der Ansicht
- Fig. 4: ein Stützelement im Teilschnitt
- Fig. 5: ein Fahrzeugrad mit einem Notlaufstützkörper, bei dem die axial äußeren Wandungsbereiche des Ringkörpers mit einer die obere Materialschicht der Verbundkörper teilweise umgebenden Aufnahme versehen sind
- Fig. 6: ein Fahrzeugrad gemäß Fig. 5 unter Notlaufbelastung

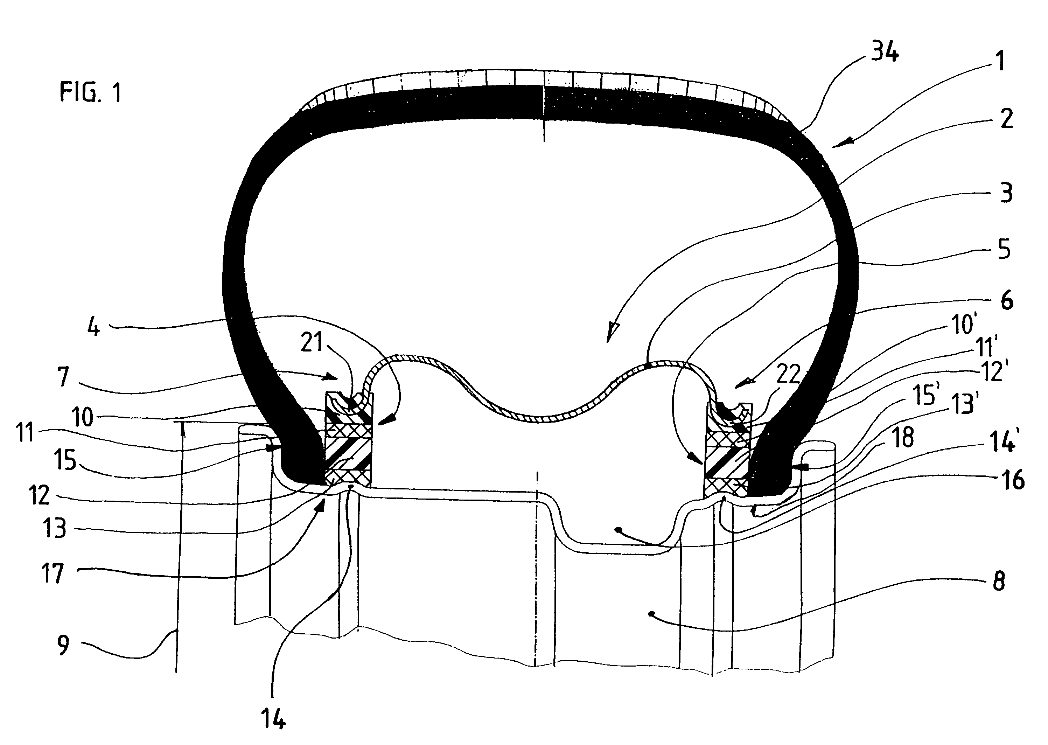

Die Figur 1 zeigt ein Fahrzeugrad 1, welches mit einem Notlaufstützkörper 2 versehen ist, der im wesentlichen besteht aus dem schalenförmigen Ringkörper 3 innerhalb des Luftreifens und den Stützelementen 4 und 5 für die beiden axial äußeren Wandungsbereiche 6 und 7 des Ringkörpers 3. Ebenfalls erkennt man eine handelsübliche Tiefbettfelge 8 mit dem Felgenhorndurchmesser 9.

Die axial äußeren Wandungsbereiche 6 und 7 des schalenförmigen Ringkörpers 3 sind dabei mit den zugehörigen ringförmigen Stützelementen 4 und 5 formschlüssig verbunden.

Die Stützelemente 4 und 5 sind hierbei als Verbundkörper ausgebildet, die über ihre radiale Höhe aus mehreren miteinander verbundenen Materialschichten unterschiedlicher Elastizität 10, 11, 12, 13 bzw. 10', 11', 12' und 13' bestehen.

Die beiden radial oberen Materialschichten 10 und 10' sind hierbei aus einem Kunststoffmaterial hergestellt, das eine wesentliche niedrigere Elastizität aufweist, als die anschließenden radial unteren Materialschichten 11 bis 13 bzw. 11' bis 13'. Die Verbundkörper 4 und 5 beinhalten weiterhin ein aus den drei Materialschichten 11, 12, 13 bzw. 11', 12', 13' bestehendes Verbundpaket, deren radial obere Materialschichten 11 und 11' und deren radial untere Materialschichten 13 und 13' eine höhere Elastizität aufweisen als die zwischenliegenden Materialschichten 12 bzw. 12'.

Die Materialschichten 11 und 11' sowie 13 und 13' bestehen hierbei aus einer Gummimischung, während die Materialschichten 12 und 12' aus einem Kunststoffmaterial bestehen, welches eine höhere Elastizität aufweist, als das Kunststoffmaterial der oben liegenden Schichten 10 und 10'.

Die unteren Materialschichten 13 und 13' liegen auf der Felge auf, werden durch den Felgenhump 14 und 14' zusätzlich fixiert und stützen mit ihren Außenseiten den Reifenwulst 15 bzw. 15'.

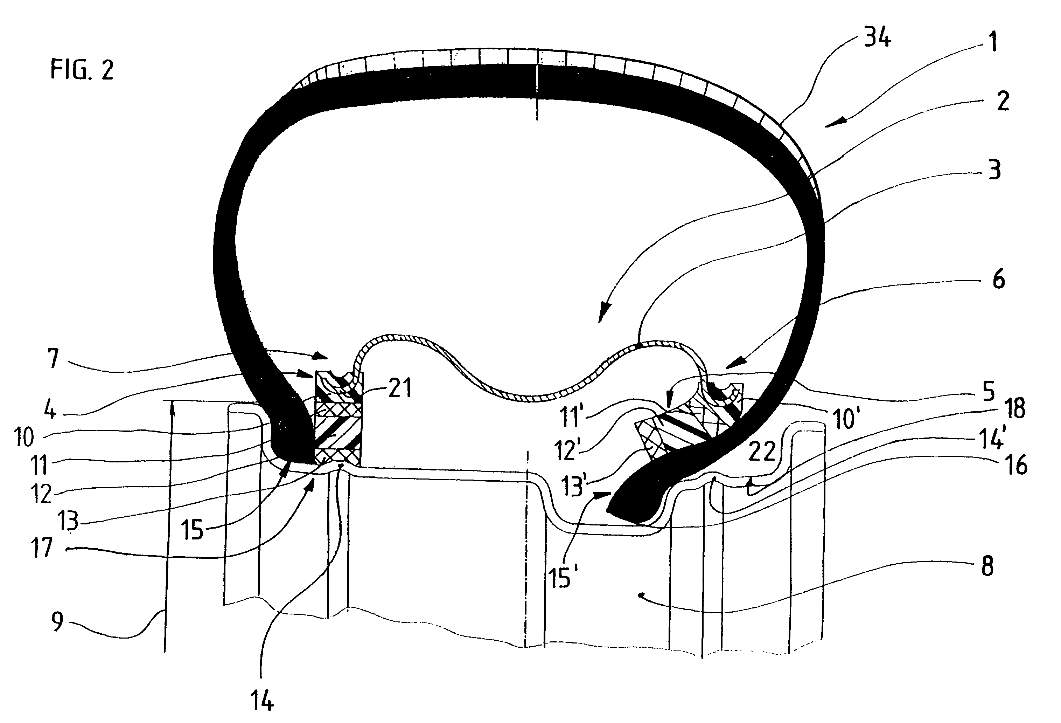

Die Figur 2 zeigt einen Zwischenschritt während der Montage eines Notlaufstützkörpers für ein erfindungsgemäßes Fahrzeugrad gemäß Figur 1. Hierbei beinhaltet die Montage in der Reihenfolge zunächst das Aufziehen des Reifenwulstes 15 durch das Tiefbett 16 in seine Position auf der Felgenschulter 17, wonach dann zunächst der Notlaufstützkörper in seine Position eingebracht wird und das Stützelement 4 in seine durch den Felgenhump 14 gestützte Position eingeschoben wird. Der nächste Schritt besteht dann darin , daß der Reifenwulst 15' unter Verformung des zweiten Stützelementes 5 ins Tiefbett 16 gedrückt wird und nachfolgend auf die Felgenschulter 18' gehoben wird, wonach auch das Stützelement 5 in seine durch den Felgenhump 14' abgestützte Position rückfedert.

Bei dem hier eingesetzten Ringkörper 3 handelt es sich um einen geschlitzten Ringkörper mit einem im wesentlichen in axialer Richtung verlaufenden Öffnungsschlitz 19, der zum Einbringen in die Reifenkavität durch scheibenförmiges Ausfedern des geschlitzten Ringes auf einen vergrößerten Montagedurchmessers gebracht wird und nach Einbau die hier dargestellte felgennahe Position einnimmt.

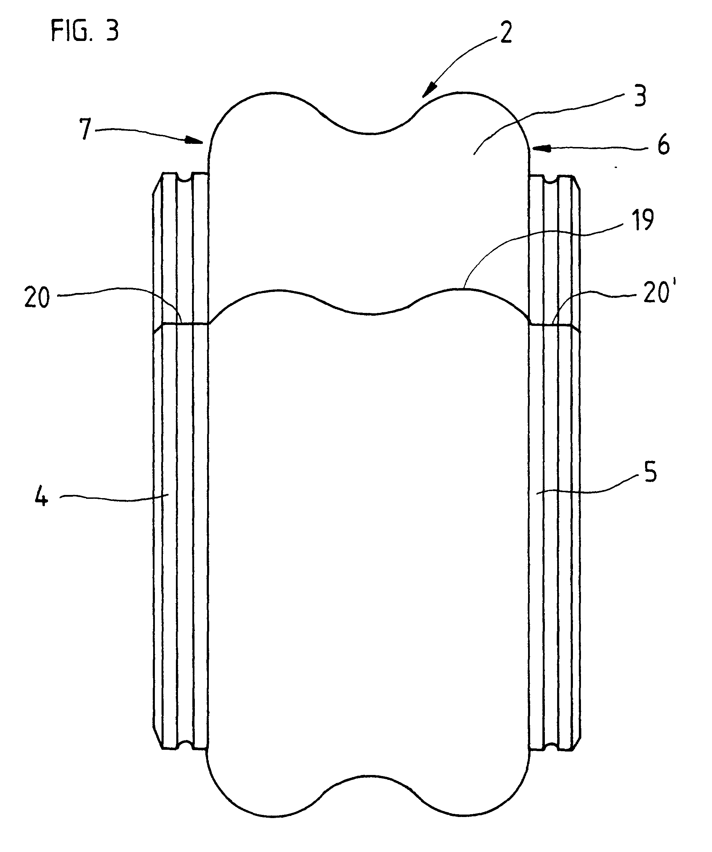

Die Figur 3 zeigt einen solchen Notlaufstützkörper mit dem im wesentlichen in axialer Richtung verlaufenden Öffnungsschlitz 19 in der Ansicht, wobei der Öffnungsschlitz auch leicht schräg, bogen- oder pfeilförmig angeordnet sein kann. Ebenfalls erkennbar sind in der Figur 3 die Trennfugen 20 und 20' der als abgelängtes Strangprofil ausgebildeten Stützelemente 4 und 5.

Die axial äußeren Wandungsbereiche 6 und 7 des Ringkörpers 3 sind hierbei mit gewölbten Profilpositiven 21 und 22 versehen, auf die die Stützelemente 4 und 5 mit ihren komplementären zur Aufnahme des Profilpositivs geeigneten Profilnegativen 23 und 24 nach Öffnung des geschlitzten Ringes aufgeschoben werden.

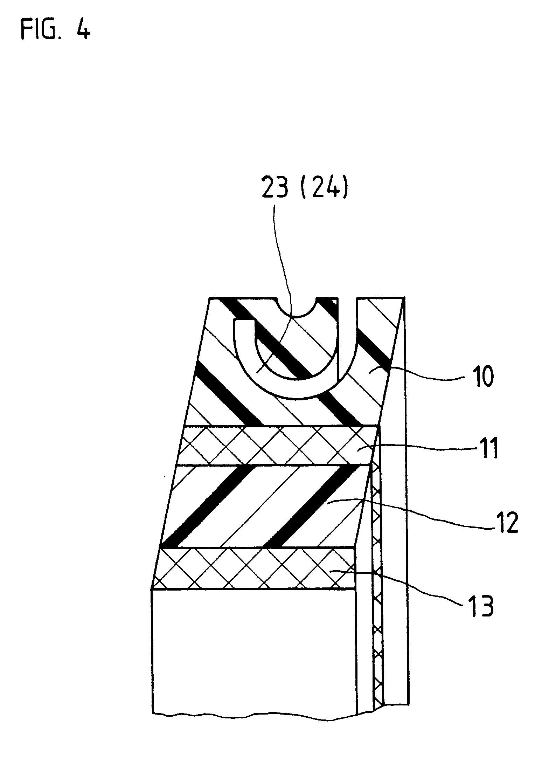

Die Figur 4 zeigt beispielhaft eines der Stützelemente im Teilschnitt mit den Materialschichten 10, 11, 12 und 13 sowie dem Profilnegativ 23 (linksseitig) (24 rechtsseitg). Mit dem hier dargestellten abgelängten Strangprofil können durch spiegelbildliches Anordnen beide Stützelemente bereitgestellt werden.

Die Verbindung zwischen den axial äußeren Wandungsbereichen des Ringkörpers und der radial oberen Materialschicht des Verbundkörpers kann hierbei zusätzlich verklebt werden, wobei die Gestaltung der Profilpositive und -negative sich dann vereinfachen läßt und etwa lediglich in Form einer Abwinklung der axial äußeren Wandungsbereiche des Ringkörpers und einer entsprechenden Aufnahme in der oberen Materialschicht gestaltet werden können.

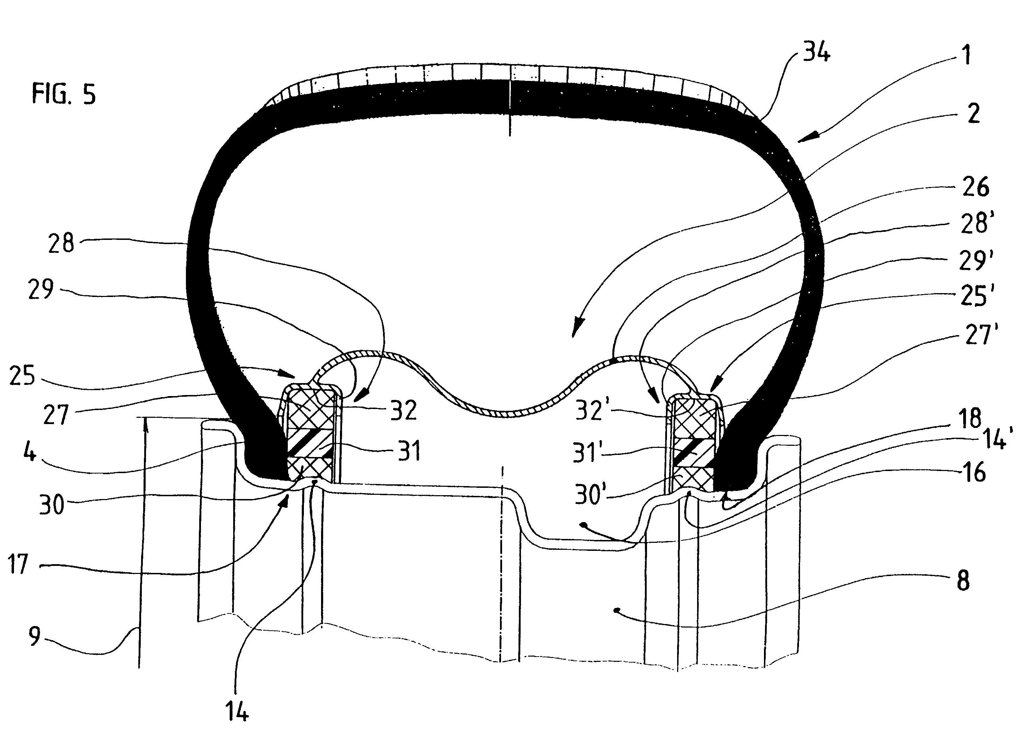

Die Figur 5 zeigt ein Fahrzeugrad mit einem Notlaufstützkörper 2, bei dem die äußeren Wandungsbereiche 25 und 25' des Ringkörpers 26 mit einer die oberen Materialschichten 27 und 27' der als Verbundkörper ausgebildeten Stützelemente 28 und 28' teilweise umgebenden Aufnahmen 29 und 29' versehen ist.

Die radial oberen und durch die Aufnahmen 29 und 29' teilweise umgebenden Materialschichten 27 und 27' bestehen hierbei aus einer Gummimischung, ebenso wie die radial unteren und auf der Felge aufliegenden Materialschichten 30 und 30' der Verbundkörper. Die zwischen diesen Schichten liegenden Materialschichten 31 und 31' bestehen aus Kunststoff und weisen eine niedrigere Elastizität auf als die Materialschichten 27, 27', 30 und 30'.

Die oberen Materialschichten 27 und 27' der Verbundkörper sind hierbei durch eine Kaltvulkanisation im Verbindungsbereich 32 und 32' am Ringkörper 26 befestigt. Die Verbindung, in diesem Bereich kann auch durch andere kraftschlüssige Verfahren, wie Kleben oder durch Formschluß, etwa durch komplementäre Profile oder durch Klemm- oder Rastverbindungen, erfolgen.

Während der Montage können die Stützelemente in ähnlicher Weise wie in der Figur 2 dargestellt verformt werden, so daß das Einbringen des Notlaufstützkörpers in die Reifenkavität problemlos erfolgen kann. Im Notlauf, d. h. in dem Fall, in dem die Innenseite des Laufstreifenbereiches des luftleeren Reifens am Ringkörper 26 anliegt und dieser also lasttragend mit Radialkraft beaufschlagt wird, tauchen die oberen Materialschichten 27 und 27' (der Verbundkörper) zunehmend in die Aufnahmen 29 und 29' des Ringkörpers ein und werden schließlich vollständig von den Aufnahmen umschlossen und in diesem Verformungszustand in ihrer weiteren Federung völlig blockiert.

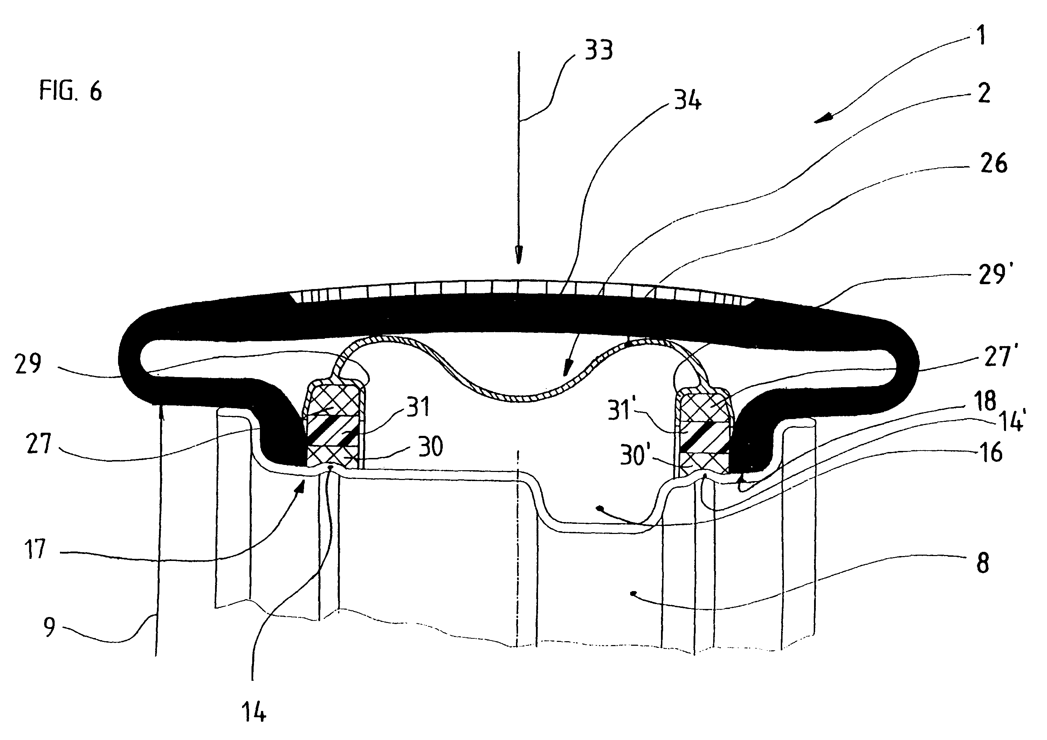

Verdeutlicht wird dies in der Figur 6, die das Stützelement unter einer Radialbelastung 33 im Notlauf zeigt. Deutlich erkennt man hier, daß die oberen Materialschichten 27 und 27' der Verbundkörper vollständig in die Aufnahmen 29 und 29' eingetaucht sind, wodurch diese Materialschichten bereits vollständig in ihrer Elastizität blockiert sind. Ebenfalls teilweise eintauchen in die Aufnahmen 29 und 29' können auch - je nach Elastizität - die mittleren Schichten 31 und 31' des Verbundkörpers, die damit ebenfalls teilweise in ihrer Elastizität blockiert werden. Es ergibt sich somit im oberen Bereich des Verbundkörpers eine starke Versteifung der Gesamtkonstruktion, wobei in Kombination mit der Kompressionsverformung der unteren Materialschichten ein extrem hoher Widerstand gegen Verformung in axialer Richtung aufgebaut wird und ein Eintreten des Felgenwulstes ins Tiefbett sicher verhindert werden kann. Damit ist ein Abspringen des Reifens 34 nicht mehr zu befürchten.

### Bezugszeichenliste

- 1: Fahrzeugrad
- 2: Notlaufstützkörper
- 3: schalenförmiger Ringkörper
- 4, 5: Stützelement
- 6, 7: axial äußerer Wandungsbereich des Ringkörpers
- 8: Tiefbettfelge
- 9: Felgenhorndurchmesser
- 10 - 13: Materialschicht
- 10' - 13': Materialschicht
- 14, 14': Felgenhump
- 15, 15': Reifenwulst
- 16: Tiefbett
- 17, 18': Felgenschulter
- 19: Öffnungsschlitz
- 20, 20': Trennfuge
- 21, 22: Profilpositiv
- 23, 24: Profilnegativ
- 25, 25': axial äußerer Wandungsbereich
- 26: schalenförmiger Ringkörper
- 27, 27': obere Materialschicht
- 28, 28': Stützelement
- 29, 29': Aufnahme
- 30, 30': untere Materialschicht
- 31, 31': Zwischenschicht
- 32, 32': Verbindungsbereich
- 33: Radialbelastung
- 34: Reifen

## Patentansprüche

1. Fahrzeugrad (1) mit einem Notlaufstützkörper (2) für einen auf einer Radfelge (8) befestigten Luftreifen, der im wesentlichen einen Laufstreifen, zwei Seitenwände, eine Karkasse, Verstärkungselemente, sowie zwei mit Wulstkernen versehene Reifenwülste aufweist, bei dem der Notlaufstützkörper als schalenförmiger Ringkörper (3) innerhalb des Luftreifens ausgebildet ist, der eine den Reifen im Schadensfall abstützende Notlauffläche aufweist und sich mit seinen beiden axial äußeren Wandungsbereichen (6, 7) über ringförmige Stützelemente (4, 5) auf der Radfelge abstützt, wobei die Stützelemente in radialer und in axialer Belastungsrichtung unterschiedliche Elastizitäten aufweisen, **dadurch gekennzeichnet,**
**daß** die ringförmigen Stützelemente als Verbundkörper ausgebildet sind, die über die radiale Höhe der Stützkörper aus mehreren miteinander verbundenen Materialschichten (10, 11, 12, 13) unterschiedlicher Elastizität bestehen.

2. Fahrzeugrad nach Anspruch 1, **dadurch gekennzeichnet, daß** der Ringkörper (3) als ein geschlitzter Ringkörper mit einem im wesentlichen in axialer Richtung verlaufenden Öffnungsschlitz ausgebildet ist.

3. Fahrzeugrad nach Anspruch 1 oder 2, **dadurch gekennzeichnet, daß** der Verbundkörper eine radial obere und mit dem Ringkörper verbundene Materialschicht beinhaltet, die eine niedrigere Elastizität aufweist als die anschließenden radial unteren Materialschichten.

4. Fahrzeugrad nach einem oder mehreren der Ansprüche 1 bis 3, **dadurch gekennzeichnet, daß** der Verbundkörper ein aus mindestens drei Materialschichten bestehendes Verbundpaket beinhaltet, dessen radial obere Materialschicht und dessen radial untere Materialschicht eine höhere Elastizität aufweisen als die zwischenliegende(n) Materialschicht(en).

5. Fahrzeugrad nach Anspruch 4, **dadurch gekennzeichnet, daß** die radial untere Materialschicht auf der Felge aufliegt.

6. Fahrzeugrad nach Anspruch 1 bis 5, **dadurch gekennzeichnet, daß** die radial obere und mit dem Ringkörper verbundene Materialschicht mit dem jeweiligen axial äußeren Wandungsbereich des Ringkörpers kraftschlüssig verbunden ist.

7. Fahrzeugrad nach Anspruch 1 bis 5, **dadurch gekennzeichnet, daß** zur Verbindung des axial äußeren Wandungsbereiches des Ringkörpers als erstem Teil und der radial oberen Materialschicht des Verbundkörpers als zweitem Teil entweder der axial äußere Wandungsbereich des Ringkörpers oder die radial obere Materialschicht mit einem Profilpositiv versehen ist und der jeweils andere Teil ein zur Aufnahme des Profilpositivs komplementäres Profilnegativ aufweist.

8. Fahrzeugrad nach Anspruch 1 oder 2, **dadurch gekennzeichnet, daß** der axial äußere Wandungsbereich des Ringkörpers mit einer die obere Materialschicht des Verbundkörpers teilweise umgebenden Aufnahme versehen ist und der Verbundkörper aus mindestens drei Materialschichten besteht, dessen radial obere und durch der Aufnahme des Ringkörpers teilweise umgebene Materialschicht und dessen radial untere und auf der Felge aufliegende Materialschicht eine höhere Elastizität aufweisen als die zwischenliegende(n) Materialschicht(en).

9. Fahrzeugrad nach Anspruch 1 bis 8, **dadurch gekennzeichnet, daß** die Materialschichten höherer Elastizität aus Gummi und die Materialschichten niedrigerer Elastizität aus Kunststoff bestehen.

10. Fahrzeugrad nach Anspruch 1 bis 9, **dadurch gekennzeichnet, daß** der Notlaufstützkörper als umlaufender schalenförmiger Ringkörper ausgebildet ist, der aus mindestens zwei durch jeweils eine radiale Einschnürung voneinander getrennten nach radial außen gewölbten Bereichen besteht und der sich über seine beiden axial äußeren Wandungsbereiche abstützt.

## Claims

1. Vehicle wheel (1), having an emergency running supporting member (2) for a pneumatic tyre which is mounted on a wheel rim (8) and includes substantially a tread strip, two sidewalls, a carcase and reinforcing members, as well as two tyre beads which are provided with bead cores, wherein the emergency running supporting member is in the form of a dish-shaped annular member (3) internally of the pneumatic tyre, which annular member includes an emergency running face, which supports the tyre in the event of damage, and is supported on the wheel rim with its two axially outer wall regions (6, 7) via annular supports (4, 5), the supports having variable degrees of elasticity in the radial and axial loading directions, **characterised in that** the annular supports are in the form of composite structures which, over the radial height of the supporting members, comprise a plurality of interconnected layers of material (10, 11, 12, 13) of variable degrees of elasticity.

2. Vehicle wheel according to claim 1, **characterised in that** the annular member (3) is in the form of a slotted annular member having an aperture slot which extends substantially in the axial direction.

3. Vehicle wheel according to claim 1 or 2, **characterised in that** the composite structure includes a radially upper layer of material, which is connected to the annular member and has a lower degree of elasticity than the subsequent radially lower layers of material.

4. Vehicle wheel according to one or more of claims 1 to 3, **characterised in that** the composite structure includes a composite bundle which comprises at least three layers of material, the radially upper layer of said layers of material and the radially lower layer of said layers of material having a higher degree of elasticity than the interposed layer(s) of material.

5. Vehicle wheel according to claim 4, **characterised in that** the radially lower layer of material rests on the rim.

6. Vehicle wheel according to claims 1 to 5, **characterised in that** the radially upper layer of material, which is connected to the annular member, is connected to the respective axially outer wall region of the annular member in a force-fitting manner.

7. Vehicle wheel according to claims 1 to 5, **characterised in that**, in order to connect the axially outer wall region of the annular member as the first part and the radially upper layer of material of the composite structure as the second part, either the axially outer wall region of the annular member or the radially upper layer of material is provided with a positive profile, and the other respective part has a complementary negative profile to accommodate the positive profile.

8. Vehicle wheel according to claim 1 or 2, **characterised in that** the axially outer wall region of the annular member is provided with a receiving means, which partially surrounds the upper layer of material of the composite structure, and the composite structure comprises at least three layers of material, the radially upper layer of said layers of material, which is partially surrounded by the receiving means of the annular member, and the radially lower layer of said layers of material, which rests on the rim, having a higher degree of elasticity than the interposed layer(s) of material.

9. Vehicle wheel according to claims 1 to 8, **characterised in that** the layers of material having a higher degree of elasticity are formed from rubber, and the layers of material having a lower degree of elasticity are formed from plastics material.

10. Vehicle wheel according to claims 1 to 9, **characterised in that** the emergency running supporting member is in the form of a circumferential, dish-shaped annular member, which comprises at least two radially outwardly curved regions separated from each other by a respective radial constriction, and which annular member is supported via its two axially outer wall regions.

## Revendications

1. Roue de véhicule (1) comprenant un corps d'appui (2) pour fonctionnement de secours concernant un pneu fixé sur une jante de roue (8), lequel pneu comprend essentiellement une bande de roulement, deux flancs latéraux, une carcasse, des éléments de renfort, ainsi que deux talons de pneu dotés de tringles de talon, roue de véhicule où le corps d'appui pour fonctionnement de secours est configuré à l'intérieur du pneu comme un corps annulaire (3) en forme de cuvette, lequel corps d'appui pour fonctionnement de secours comprend une surface de roulement de secours supportant le pneu en cas de dommage et porte, avec ses deux zones de paroi extérieures axiales (6, 7), sur la jante de la roue, par des éléments d'appui (4, 5) de forme annulaire, où les éléments d'appui présentent, dans les directions de contrainte radiale et axiale, différentes élasticités,
**caractérisée en ce que** les éléments d'appui de forme annulaire sont configurés comme des corps composites qui se composent, sur la hauteur radiale des corps d'appui, de plusieurs couches de matériau (10, 11, 12, 13) reliées entre elles et d'élasticité différente.

2. Roue de véhicule selon la revendication 1, **caractérisée en ce que** le corps annulaire (3) est configuré comme un corps annulaire fendu comprenant une fente d'ouverture s'étendant pratiquement dans le sens axial.

3. Roue de véhicule selon la revendication 1 ou 2, **caractérisée en ce que** le corps composite contient une couche de matériau supérieure radiale reliée au corps annulaire, laquelle couche de matériau présente une élasticité inférieure aux couches de matériau inférieures radiales qui suivent.

4. Roue de véhicule selon l'une quelconque ou plusieurs des revendications 1 à 3, **caractérisée en ce que** le corps composite contient un paquet composite se composant d'au moins trois couches de matériau, paquet composite dont la couche de matériau supérieure radiale et dont la couche de matériau inférieure radiale présentent une plus grande élasticité que la couche ou les couches de matériau intermédiaire(s).

5. Roue de véhicule selon la revendication 4, **caractérisée en ce que** la couche de matériau inférieure radiale s'applique sur la jante.

6. Roue de véhicule selon l'une quelconque des revendications 1 à 5, **caractérisée en ce que** la couche de matériau supérieure radiale reliée au corps annulaire est reliée par action de force à chaque zone de paroi extérieure axiale respective du corps annulaire.

7. Roue de véhicule selon l'une quelconque des revendications 1 à 5, **caractérisée en ce que**, pour la jonction de la zone de paroi extérieure axiale du corps annulaire comme première partie, et de la couche de matériau supérieure radiale du corps composite comme seconde partie, soit la zone de paroi extérieure axiale du corps annulaire, soit la couche de matériau supérieure radiale est dotée d'un positif de profil et l'autre partie, à chaque fois, comprend un négatif de profil complémentaire servant à loger le positif de profil.

8. Roue de véhicule selon la revendication 1 ou 2, **caractérisée en ce que** la zone de paroi extérieure axiale du corps annulaire est dotée d'un logement entourant partiellement la couche de matériau supérieure du corps composite et le corps composite se compose au moins de trois couches de matériau, corps composite dont la couche de matériau supérieure radiale entourée partiellement par le logement du corps annulaire et dont la couche de matériau inférieure radiale s'appliquant sur la jante présentent une plus grande élasticité que la couche ou les couches de matériau intermédiaire(s).

9. Roue de véhicule selon l'une quelconque des revendications 1 à 8, **caractérisée en ce que** les couches de matériau d'élasticité supérieure sont en caoutchouc, les couches-de matériau d'élasticité inférieure étant en matière plastique.

10. Roue de véhicule selon l'une quelconque des revendications 1 à 9, **caractérisée en ce que** le corps d'appui pour fonctionnement de secours est configuré comme un corps annulaire et circulaire en forme de cuvette, lequel corps d'appui pour fonctionnement de secours se compose d'au moins deux zones bombées radialement vers l'extérieur, séparées à chaque fois l'une de l'autre par un rétrécissement radial, et porte sur ses deux zones de paroi extérieures axiales.
